# EUROPEAN PATENT APPLICATION

(11) **EP 2 254 192 A1**
(43) Date of publication of application: **24.11.2010**
(21) Application number: 09712401.0
(22) Date of filing: 17.02.2009
(51) Int. Cl.: H01M 12/06, H01M 4/86, H01M 8/02, H01M 12/08

(54) **AIR ELECTRODE**

(30) Priority: 18.02.2008 JP 2008035408
(71) Applicant: National Institute of Advanced Industrial Science and Technology, Tokyo 100-8921 (JP)
(72) Inventor: FUJIWARA, Naoko, Ikeda-shi Osaka 563-8577 (JP); YASUDA, Kazuaki, Ikeda-shi Osaka 563-8577 (JP); IOROI, Tsutomu, Ikeda-shi Osaka 563-8577 (JP)
(74) Representative: Vossius & Partner
(86) International application number: PCT/JP2009/052618
(87) International publication number: WO 2009/104570

(57) **Abstract**

Provided are an air electrode having a structure in which an anion exchange membrane and an air electrode catalyst layer are laminated and the anion exchange membrane is disposed in contact with an aqueous alkaline solution; and a metal-air battery, an alkaline fuel cell, and a water electrolysis device each having the air electrode. The air electrode of the present invention can reduce or solve various conventional problems of an air electrode in a metal-air battery, fuel cell, and the like, which use an aqueous alkaline solution as an electrolyte, and can maintain high performance for a long period of time.

## Description

### TECHNICAL FIELD

The present invention relates to an air electrode having a novel structure and its use, the air electrode being useful as an air electrode having a function to reduce oxygen in a metal-air battery using an alkaline electrolyte, an alkaline fuel cell, or the like; and as an air electrode having a function to evolve oxygen in a metal-air secondary battery, an alkaline water electrolysis device, or the like.

### BACKGROUND ART

A metal-air battery is a battery that uses a metal such as zinc, aluminum, magnesium, or the like as a negative electrode, and an air electrode as a positive electrode. In a metal-air battery, when the anode metal is zinc, the discharge reaction of the battery is represented as follows:

Positive electrode (air electrode): O₂ + 2H₂O + 4e⁻ → 40H⁻

Negative electrode (metal electrode): 2n+20H⁻ → ZnO+H₂O+2e⁻

Total reaction: Zn+ 1/2O₂ → ZnO

In the above reaction, oxygen is supplied from outside air, and used as a positive electrode active material. The air electrode acts as a reaction field, and theoretically can be used permanently without depletion. Accordingly, because the electrical capacity of the metal-air battery is determined solely based on the negative electrode capacity, and a metal having a large capacity can be used for the negative electrode, the metal-air battery has a very large energy density. An air-zinc battery that uses zinc as the negative electrode material is safe, eco-friendly, and inexpensive. Therefore, it has been put into practical use as a low-power button-type primary battery, and has been used as a power source for hearing aids and the like. A porous electrode having a catalyst layer comprising activated carbon and manganese oxide is used as the positive-electrode material, and air is supplied thereto through a water-repellant layer comprising a porous Teflon (trademark) membrane. An aqueous potassium hydroxide solution of about 30 to about 35 wt% is used as the electrolyte. The lifetime of the battery is about 2 months because it is susceptible to humidity and carbon dioxide in the atmosphere.

If efforts to extend the lifetime of metal-air batteries, enlarge the size thereof, or develop a metal-air battery as an electrically rechargeable secondary battery are successful, such batteries are expected to be applicable to a broader field including: portable power sources for information and communication devices and mobile electronic devices; power sources for small transport means, such as scooters and electric wheelchairs; batteries for hybrid vehicles and electric vehicles; etc. In order to meet such expectations, it is necessary to promote improvements of metal-air batteries in the following aspects: durability in air atmosphere, current density, electrode reactivity and stability with respect to the discharge/charge reaction, etc.

On the other hand, an alkaline fuel cell is a fuel cell that uses an aqueous alkaline solution as the electrolyte. The electrode reaction is represented as follows:

Positive electrode (air electrode): 1/2O₂+H₂O+2e⁻ → 20H⁻

Negative electrode (fuel electrode): H₂+2OH⁻ → 2H₂O+2e⁻

Total reaction: H₂ + 1/2O₂ → H₂O

The alkaline fuel cell generally uses an aqueous potassium hydroxide solution of about 30 to about 35 wt% as the electrolyte, and is operated in the range of from room temperature to about 200°C. Phosphoric acid fuel cells and polymer electrolyte fuel cells that use an acid electrolyte mainly use a platinum-group metal as an electrode catalyst because it needs to be acid-resistant. On the other hand, a variety of materials can be selected for an alkaline fuel cell, and materials such as silver and nickel can be used as the electrode catalyst. Accordingly, alkaline fuel cells have the highest potential for cost reduction. Alkaline fuel cells have been put into practical use for applications in space development, such as the Apollo program, space shuttles, and the like. However, in alkaline fuel cells, the alkaline electrolyte reacts with carbon dioxide in the atmosphere and turns into carbonate, causing a reduction in the fuel cell performance; accordingly, only pure hydrogen and pure oxygen can be used therein, and air cannot be supplied to the positive electrode side. For this reason, alkaline fuel cells have not been made available for consumer applications.

The above-described metal-air battery and the alkaline fuel cell are similar in that they both use an aqueous alkaline solution such as potassium hydroxide, sodium hydroxide, etc. as the electrolyte, and can both employ similar components and electrode structures for their air electrodes. The air electrode is arranged at the interface between the electrolyte and the atmosphere. Accordingly, the air electrode is expected to perform multiple tasks, such as facilitating diffusion of oxygen gas, securing electrically conductive pathways for ions from an electrolyte solution, preventing leakage of the electrolyte, and the like. A general air electrode is constituted by a separator, a catalyst layer, a metal net, a water-repellant membrane, a diffusion membrane, an air distribution layer, and the like. A layer used as the catalyst layer is, for example, one that is obtained by mixing manganese oxide, which is active with respect to the oxygen reduction reaction, with carbon to produce an electrically conductive medium, and treating the medium with Teflon (trademark) to give water-repellency.

However, such conventional air electrodes will have various problems during long-term use for the reasons described below. Specifically, carbon dioxide present in the atmosphere reacts with an aqueous alkaline solution (for example, KOH), and produces alkali metal carbonate (for example, K₂CO₃). When this carbonate is deposited in fine pores in the air electrode, air diffusion will be prevented, thus causing a decrease in the air electrode performance. Further, when the aqueous alkaline solution gradually permeates into the air electrode, the concentration overvoltage will increase, and the solution will leak, along with an increase in the wetting of the air electrode.

Various countermeasures have been taken in order to solve these problems. The following various methods to suppress the reduction in the air electrode performance caused by carbon dioxide in the air have been reported: a method of providing a porous carbon dioxide removing agent in which alkali metal hydroxide is adhered to calcium hydroxide in an air suction passage connected to the air electrode (Patent Document 1) ; a method of adding inorganic compounds of calcium as a carbon dioxide absorbent to the air electrode (Patent Document 2) ; a method of removing carbon dioxide in the air by supplying air through a carbon dioxide filter filled with soda lime, lithium hydroxide, or a mixture of lithium hydroxide and calcium hydroxide (Non-Patent Document 1); and the like. Further, as for a rechargeable metal-air secondary battery, an attempt to suppress carbonate deposition caused by the reaction between carbon dioxide in the air and an alkaline electrolyte has been made by switching the concentration of the alkaline electrolyte between a low concentration during charging and a high concentration during discharging (Patent Document 3). Additionally, as for the leakage of an alkaline electrolyte, there has been proposed a method in which an air diffusion paper mainly comprising cellulose and containing an absorbing agent that absorbs the alkaline electrolyte is disposed, thereby immediately absorbing leaked alkaline electrolyte; and, when the amount of absorption exceeds a certain level, diffusion of oxygen and moisture to the air electrode is blocked so as to shut down the battery (Patent Document 4). Further, another method has been employed in which slight leakage at an early stage is detected based on a change in color by using an air diffusion paper colored with a coloring agent, such as indigo carmine, that changes color upon reaction with an alkaline electrolyte (Patent Document 5).

However, carbonate deposition caused by carbon dioxide in the atmosphere and leakage of the alkaline electrolyte cannot be completely prevented by the above-described methods, and measures for further improvement are needed. Further, the methods as described in Patent Document 1 and Non-Patent Document 1 require the installation of a carbon dioxide removing device in addition to the battery itself; these methods are thus not suitable for batteries for mobile applications, in which a reduction in the size and weight is required.

As described above, although the expansion of practical application and spread of metal-air batteries and alkaline fuel cells have been expected, the current situation is such that there are many problems arising from the use of an aqueous alkaline solution as the electrolyte, and many issues need to be improved.
Patent Document 1: Japanese Unexamined Patent Publication No. 49-49128
Patent Document 2: Japanese Unexamined Patent Publication No. 2000-3735
Patent Document 3: Japanese Unexamined Patent Publication No. 53-51448
Patent Document 4: Japanese Unexamined Patent Publication No. 62-69472
Patent Document 5: Japanese Unexamined Patent Publication No. 2005-235485
Non-Patent Document 1: Phys. Chem. Chem. Phys., 3, 368 (2001)

### DISCLOSURE OF THE INVENTION

### PROBLEM TO BE SOLVED BY THE INVENTION

The present invention is made in view of the above-described current situation of the conventional technology. A main object of the present invention is to provide a novel air electrode capable of reducing or solving the above-described various problems that are inherent in conventional air electrodes in metal-air batteries, fuel cells, and the like that use an aqueous alkaline solution as the electrolyte.

### MEANS TO SOLVE THE PROBLEMS

The present inventors conducted intensive studies in an attempt to achieve the above-described object. As a result, the present inventors found that, in batteries or fuel cells that use an aqueous alkaline solution as the electrolyte, deposition of carbonate caused by carbon dioxide in the atmosphere and leakage of the alkaline electrolyte can be greatly suppressed by employing a structure in which an anion exchange polymer membrane is arranged at the interface between an air electrode catalyst layer and the alkaline electrolyte. The present inventors further found that an air electrode having the above-described structure can suppress the influence of carbon dioxide in the atmosphere and the like and maintain good performance over a long period of time, not only when the air electrode is used for the oxygen reduction reaction in a metal-air battery, but also when it is used for the charging reaction, i.e., oxygen evolution reaction. The present invention has been completed as a result of further studies based on such findings.

Specifically, the present invention provides an air electrode and a use thereof, as described below.
1. An air electrode, comprising a structure in which an anion exchange membrane and an air electrode catalyst layer are laminated, and the anion exchange membrane is disposed in contact with an aqueous alkaline solution.
2. The air electrode as defined in Item 1, wherein the anion exchange membrane is a polymer membrane having at least one anion exchange group selected from the group consisting of quaternary ammonium group, pyridinium group, imidazolium group, phosphonium group, and sulfonium group.
3. The air electrode as defined in Item 1, wherein the electrode is a positive electrode for a metal-air primary battery or a metal-air secondary battery.
4. The air electrode as defined in Item 1, wherein the electrode is a positive electrode for an alkaline fuel cell.
5. The air electrode as defined in Item 1, wherein the electrode is an oxygen evolution electrode for an alkaline water electrolysis device.
6. A metal-air primary battery or metal-air secondary battery, comprising an electrolyte comprising an aqueous alkaline solution, and a positive electrode comprising the air electrode as defined in Item 1.
7. An alkaline fuel cell, comprising an electrolyte comprising an aqueous alkaline solution, and a positive electrode comprising the air electrode as defined in Item 1.
8. The alkaline fuel cell as defined in Item 7, wherein the cell is used in applications both as a fuel cell and as a water electrolysis device.
9. An alkaline water electrolysis device, comprising an electrolysis cell containing an electrolyte comprising an aqueous alkaline solution, and an oxygen evolution electrode comprising the air electrode as defined in Item 1.

The air electrode of the present invention is an air electrode that can be used in a battery and the like that use an aqueous alkaline solution as an electrolyte, and has a structure in which an anion exchange membrane and an air electrode catalyst layer are laminated.

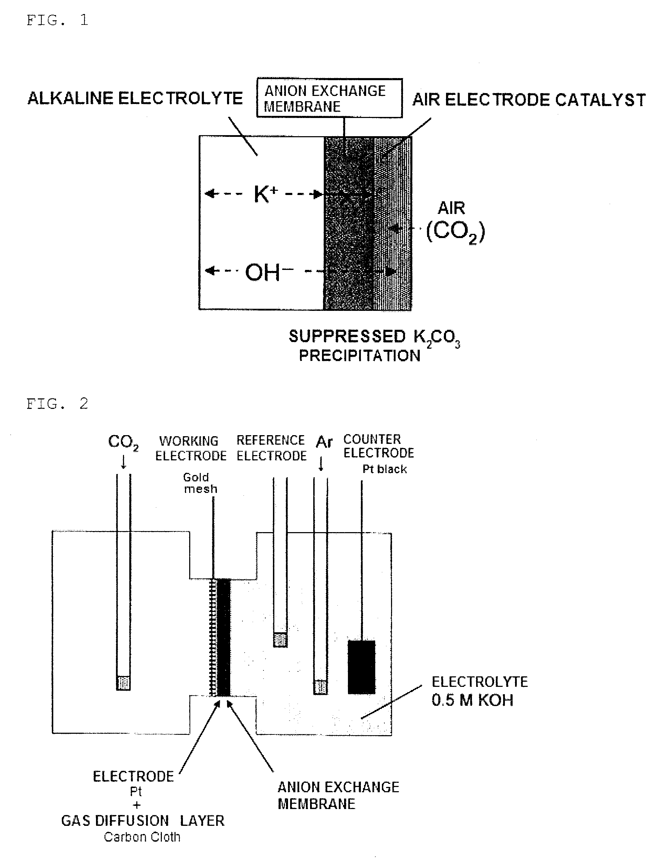

FIG. 1 is a diagram schematically showing a structure of the air electrode of the present invention. As shown in FIG. 1, the air electrode of the present invention has a structure in which an anion exchange membrane and an air electrode catalyst layer are laminated, and the anion exchange membrane is disposed in contact with an aqueous alkaline solution as an electrolyte. In an air electrode having a structure as described above, oxygen in the air is reduced on the catalyst surface by the reaction represented by the following formula.

O₂ + 2H₂O + 4e⁻ → 4OH⁻

In a battery that uses an air electrode having a structure as described above, an anion exchange membrane for the air electrode is disposed in contact with an aqueous alkaline solution as the electrolyte. Then, a metal anode (in the case of a metal-air battery) or a fuel electrode (in the case of an alkaline fuel cell) is placed such that the aqueous alkaline solution is present between the anion exchange membrane and the metal anode or the fuel electrode. Hydroxide ion (OH⁻) produced by the oxygen reduction on the air electrode side moves through the anion exchange membrane and the alkaline electrolyte, and reacts with the metal anode (in the case of a metal-air battery) or with a fuel such as hydrogen (in the case of an alkaline fuel cell).

A battery or fuel cell that uses an air electrode having the above-described structure is significantly characterized by having a structure in which the anion exchange membrane is disposed between the air electrode catalyst layer and the aqueous alkaline solution. Because the anion exchange membrane is disposed at the interface between the air electrode catalyst layer and the aqueous alkaline solution, although hydroxide ions, i.e., anions, move through the anion exchange membrane, penetration of cations such as alkali metal ions (e.g., K⁺) and anode metal ions (e.g., Zn²⁺) in the alkaline electrolyte to the air electrode side is prevented by the anion exchange membrane. As a result, precipitation of metal oxide (ZnO) and carbonate (K₂CO₃) produced by the reaction with carbon dioxide in the air can be suppressed at the air electrode.

Further, in the air electrode of the present invention, the anion exchange membrane itself is a hydroxide ion conductor, allowing the conduction pathways for hydroxide ions to be maintained by the contact between solids. In particular, when a structure in which an anion exchange resin is mixed into an air electrode catalyst layer is employed, as described below, high hydroxide ion conductivity can be ensured without the need to impregnate the air electrode catalyst layer with an alkaline electrolyte. Accordingly, permeation of the alkaline electrolyte into the air electrode catalyst layer is more suppressed compared to when the air electrode catalyst layer is in direct contact with the alkaline electrolyte, and it is thus possible to avoid a reduction in the performance due to the wetting of the air electrode catalyst layer and the possibility of leakage of strong alkali to the outside.

Further, an air electrode having the above-described structure has excellent activity not only for the oxygen reduction reaction, but also for the oxygen evolution reaction described below. Furthermore, high performance can be maintained for a long period of time.

2OH⁻ → 1/2 O₂ + H₂O + 2 e⁻

This is due to a reason similar to that in the above-described oxygen reduction reaction. By adopting a structure in which the anion exchange membrane and the air electrode catalyst layer are laminated, while hydroxide ions are allowed to move during the oxygen evolution reaction, penetration of cations such as alkali metal ions and anode metal ions in the alkaline electrolyte into the air electrode side can be prevented by the anion exchange membrane, thus suppressing the reaction between these cations and carbon dioxide. This is the main reason for the above-described effect.

As described above, the air electrode of the present invention can maintain high performance with respect to both the oxygen reduction reaction and the oxygen evolution reaction for a long period of time. Accordingly, in addition to the use as an air electrode (positive electrode) for a metal-air primary battery, an air electrode (positive electrode) for an alkaline fuel cell, and the like, the air electrode of the present invention can also be effectively used as a positive electrode, which is a reversible electrode, that can be discharged and charged in a battery such as a metal-air secondary battery that uses an aqueous alkaline solution as the electrolyte. Further, because the air electrode of the present invention can maintain high performance with respect to the oxygen evolution reaction for a long period of time, it can be effectively used as an oxygen evolution electrode in an alkaline water electrolysis device. The present invention also makes it possible to use an alkaline fuel cell itself as a water electrolysis device for the oxygen and hydrogen evolution reactions.

Each component of the air electrode of the present invention is specifically described below.

### (1) Anion Exchange Membrane

An anion exchange group-containing polymer membrane that allows anion such as OH⁻ to penetrate therethrough and shields cations such as K⁺, Na⁺, etc. is used as the anion exchange membrane. The types of anion exchange membranes are not particularly limited. Examples of anion exchange membranes that may be used include those composed of polymers having an anion exchange group such as a quaternary ammonium group, pyridinium group, imidazolium group, phosphonium group, sulfonium group, and the like, the polymer including hydrocarbon-based resins (for example, polystyrene, polysulfone, polyethersulphone, polyetheretherketone, polyphenylene, polybenzimidazole, polyimide, polyaryleneether, etc.), fluorine-containing resins, and the like. The ion exchange capacity of the anion exchange membrane is preferably about 0.1 to 10 meq./g, more preferably 0.5 to 5 meq./g. The thickness of the anion exchange membrane is preferably about 5 to 300 µm, more preferably about 10 to 100 µm.

### (2) Components of Catalyst

Examples of catalysts that may be used for the air electrode of the present invention include various catalysts such as metals, metal alloys, metal oxides, metal complexes, and the like, which are conventionally known as catalysts for air electrodes.

The types of metals include, for example, platinum, palladium, iridium, rhodium, ruthenium, gold, silver, titanium, vanadium, chromium, manganese, iron, cobalt, nickel, copper, zinc, etc. A metal catalyst, metal oxide, or metal complex containing a single metal component selected from the above-listed metals; an alloy or metal oxide formed by any combination of two or more of these metals; composite of metal complex; or the like may be used.

In addition to the above, known oxides such as perovskite-type transition metal oxides represented by a composition formula ABO₃; pyrochlore-type oxides represented by a composition formula A₂B₂O₇; and spinel-type oxides represented by a composition formula AB₂O₄; or the like may also be used as the catalyst for the air electrode. In particular, catalysts comprising these oxides have excellent activity for both the oxygen reduction reaction and the oxygen evolution reaction, and can be effectively used in particular as the catalysts for reversible air electrodes.

Of the catalysts comprising these oxides, the perovskite-type oxides that can be used include an oxide represented by LaCoO₃; partial substitution products in which La in the oxide is partially substituted by Ca, Sr, Ba, etc.; partial substitution products in which Co in the oxide is partially substituted by Mn, Ni, Cu, Fe, Ir, etc. ; and the like. The pyrochlore-type oxides that can be used include oxides represented by composition formulae Pb₂Ru₂O_{6.5}, Bi₂R_{U2}O₇, etc.; partial substitution products in which Ru of theses oxides is partially substituted by Ir, Pb, etc.; and the like. The spinel-type oxides that can be used include an oxide represented by composition formula LiMn₂O₄; partial substitutions in which Mn of the oxide is partially substituted by Co, Fe, etc.; and the like. Further, an oxide represented by a composition formula Co₃O₄; partial substitution products in which Co of the oxide is partially substituted by Ni, Cu, Mn, etc.; and the like may also be used.

Additionally, a composite catalyst composed of a metal catalyst selected from the above examples and another metal oxide; a mixture of catalyst fine particles with conductive materials such as carbon; a supported catalyst in which catalyst fine particles are dispersed on a support such as carbon, metal oxides, or the like may also be used.

### (3) Structure of Pair Electrode

The air electrode of the present invention has a structure in which the air electrode catalyst layer and the anion exchange membrane are laminated.

The air electrode catalyst layer and the anion exchange membrane may be unified. Conversely, they may simply be superposed with each other without unifying the air electrode catalyst layer with the anion exchange membrane.

The unified body of the anion exchange membrane and the air electrode catalyst layer can be produced by a method similar to the method known as an electrode manufacturing method of a conventional polymer electrolyte fuel cell. For example, the following methods may be used: a method in which a catalyst ink produced by mixing catalyst powder and a resin solution is formed into a thin membrane, after which the thin membrane is hot-pressed onto an anion exchange membrane; a method in which a catalyst ink is directly applied to and dried on an anion exchange membrane; and the like. The resin solution is preferably a solution containing an anion-exchanging resin with an ion exchange capacity of about 0.1 to 10 meq./g (more preferably 0. 5 to 5 meq. /g) as is the case with the anion exchange membrane. However, the resin solution may contain a polymer resin having no ionic group, such as polyvinylidene fluoride, polyvinyl butyral, or the like. A catalyst may be directly attached to the anion exchange membrane by other various methods such as impregnation-reduction treatment, electroless plating, electroplating, sputtering, CVD, etc.

The thickness of the air electrode catalyst layer is not particularly limited; usually, it may be about 0.1 to 100 µm. The amount of catalyst is also not particularly limited. For example, it may be about 0.01 to 20 mg/cm² on the basis of the surface area of the anion exchange membrane.

An anion exchange membrane and an air electrode catalyst layer may also be unified by preparing an air electrode catalyst layer by a method in which an electrode catalyst ink is directly applied to a gas diffusion layer or a current collector and dried, or a method in which a metal complex as a precursor is impregnated into a gas diffusion layer or a current collector and reduced, and then hot-pressing the thus-prepared catalyst layer with an anion exchange membrane.

Other structures of the air electrode may be similar to those of a known air electrode. For example, a structure may be such that a current collector such as carbon paper, carbon cloth, metal mesh, or metal sintered body is disposed on the catalyst layer side of the air electrode; and a water-repellent membrane, a diffusion membrane, an air distribution layer, and the like are further disposed thereon.

### (4) Structure or Battery and Fuel Cell

In batteries and fuel cells that use the air electrode of the present invention, the air electrode is disposed such that the anion exchange membrane thereof is in contact with the aqueous alkaline solution as the electrolyte. By employing this structure, penetration of cations such as anode metal ions (e.g., Zn²⁺) and alkali metal ions (e.g., K⁺) in the aqueous alkaline solution can be prevented by the anion exchange membrane, and deposition of metal oxide (ZnO) and carbonate (K₂CO₃) produced by the reaction with carbon dioxide in the air can be suppressed.

A metal anode (in the case of a metal-air battery) or a fuel electrode (in the case of an alkaline fuel cell) is placed on the opposite side of the air electrode, with the aqueous alkaline solution as the electrolyte interposed therebetween.

An aqueous alkaline solution used as the electrolyte may be an aqueous solution containing alkali such as potassium hydroxide, sodium hydroxide, and the like. The concentration of the aqueous alkaline solution is not particularly limited. For example, the concentration of alkali metal hydroxide in the solution may be about 0.1 to 40 wt%.

As a metal anode in a metal-air battery, metals such as zinc, aluminum, magnesium, and the like may be used. The specific structure of the metal anode may be similar to that of metal anodes in known metal-air batteries.

The structure of the fuel electrode in a fuel cell is also not particularly limited. The structure may be similar to that of fuel electrodes in known alkaline fuel cells. Various types of conventionally known metals, metal alloys, metal complexes, and the like may be used as the catalyst for a fuel electrode. The metals that can be used include, for example, noble metals that are used in conventional PEFC, such as platinum, palladium, iridium, rhodium, ruthenium, gold, and the like; and base metals such as nickel, silver, cobalt, iron, copper, zinc, and the like. A metal catalyst or metal complex containing a single metal component selected from the above-listed metals; an alloy formed by any combination of two or more of these metals; composite of metal complex; or the like may be used. Additionally, a composite catalyst comprising a metal catalyst selected from the above examples and another metal oxide; and a supported catalyst in which catalyst fine particles are dispersed on a support such as carbon, metal oxides, or the like may also be used.

In the battery and the fuel cell having the above-described structure, oxygen or air may be supplied or spontaneously diffused to the air electrode side. Further, an alkaline fuel cell requires fuel supply to the fuel electrode side. Alcohols such as methanol, ethanol, isopropanol, ethylene glycol etc., solutions of formic acid, sodium borohydride, hydrazine, sugar, and the like, may be used as fuels, besides hydrogen gas.

The air electrode of the metal-air battery having the above-described structure can maintain high activity for the oxygen evolution reaction as well as the oxygen reduction reaction for a long period of time. Therefore, such a metal-air battery undergoes only a slight reduction in performance not only when the discharge reaction is carried out, but also when the discharge/charge reaction is repeatedly carried out; and it can be usefully used not only as a primary battery, but also as a metal-air secondary battery.

### (5) Alkaline Water Electrolyses Device

When the air electrode of the present invention is used as an oxygen evolution electrode for an alkaline water electrolysis device, the water electrolysis device may have a structure that is similar to that of a known water electrolysis device. In other words, the structure may be such that an electrolyte comprising an aqueous alkaline solution is contained in an electrolysis cell, and the air electrode of the present invention is disposed in contact with the aqueous alkaline solution.

As with the electrolyte in a metal-air battery and the like, examples of aqueous alkaline solutions that may be used include an aqueous solution containing alkali metal hydroxide, such as potassium hydroxide, sodium hydroxide, and the like at a concentration of about 0.1 to 40 wt%.

Further, electrodes that may be used as hydrogen evolution electrodes include nickel, iron, platinum, palladium, iridium, and the like.

The electrolysis conditions are not particularly limited. They may be similar to those for a known method.

Further, in an alkaline fuel cell that uses the air electrode of the present invention, application of the voltage, which is opposite to the voltage during power generation, to the air electrode and the fuel electrode can cause an occurrence of the oxygen evolution reaction in the air electrode and the hydrogen evolution reaction in the fuel electrode. Accordingly, an alkaline fuel cell that uses the air electrode of the present invention may also be used as a water electrolysis device by utilizing the air electrode as an oxygen evolution electrode, and thus can be used in applications as both a fuel cell and as a water electrolysis device.

### (6) Characteristics of the Air Electrode of the Present Invention

The air electrode of the present invention having the above-described structure has the following excellent characteristics:

(i) The anion exchange membrane disposed at the interface between the air electrode catalyst layer and the aqueous alkaline solution can prevent penetration of cation components in the alkaline electrolyte to the air electrode catalyst layer side, and suppress deposition of carbonate produced by the reaction with carbon dioxide in the air. This can extend the lifetime of metal-air batteries, alkaline fuel cells, and the like that use the air electrode of the present invention.

(ii) When a conventional air electrode is used in a metal-air battery, metal cations are formed in the alkaline electrolyte by the dissolution of a metal anode, and then move to the air electrode side, and may be deposited as metal oxides. However, in the air electrode of the present invention, penetration of metal cations can be prevented by the anion exchange membrane, and thus the influence of penetration can be avoided. As a result, degradation of the air electrode performance is small, and the lifetime of a metal-air battery can be extended.

(iii) By employing the structure in which the anion exchange membrane, which is a solid polymer membrane, is in contact with the air electrode catalyst layer, a conduction pathway for hydroxide ions can be maintained by the contact between solids, without the catalyst layer coming into contact with the aqueous alkaline solution. In particular, when the structure in which anion exchange resins are mixed in the air electrode catalyst layer is employed, high hydroxide ion conductivity can be ensured without the need to impregnate the air electrode catalyst layer with the alkaline electrolyte. Accordingly, a reduction in the performance due to the wetting of the air electrode catalyst layer and the possibility of leakage of strong alkali to the outside can be avoided.

(iv) By arranging the anion exchange membrane at the interface between the aqueous alkaline solution and the air electrode catalyst layer, permeation of the aqueous alkaline solution into the air electrode side is suppressed, and alkali leakage from the air electrode side can be avoided.

(v) The air electrode of the present invention can maintain high performance with respect to not only the oxygen reduction reaction but also to the oxygen evolution reaction. Accordingly, the air electrode can be effectively used as an air electrode for a metal-air secondary battery, an oxygen evolution electrode in an alkaline water electrolysis device, and the like. Further, the use of the air electrode of the present invention enables the use of an alkaline fuel cell itself as a water electrolysis device.

### ADVANTAGEOUS EFFECTS OF THE INVENTION

As described above, the air electrode of the present invention is characterized by providing an anion exchange membrane at the interface between the air electrode catalyst layer and the aqueous alkaline solution. Accordingly, a stable air electrode performance can be maintained for a long period of time, and leakage of aqueous alkaline solution can be avoided. Consequently, safe and user-friendly metal-air batteries, alkaline fuel cells, and the like can be provided. Further, the air electrode of the present invention can also maintain excellent activity for the oxygen evolution reaction. This enables practical application of a metal-air secondary battery, and the use of an alkaline fuel cell as a water electrolysis device.

As described above, the air electrode of the present invention can solve or reduce various problems of conventional air electrodes, and is suitable as an air electrode for a metal-air battery, an alkaline fuel cell, and the like. A metal-air battery or alkaline fuel cell that uses the air electrode of the present invention is an extremely useful power source for various applications such as: small power sources for portable devices (mobile devices and IT devices), power sources for small transport means (scooters and electric wheelchairs), batteries for vehicles (hybrid vehicles and electric vehicles), and the like. Further, the air electrode can also be effectively used as a reversible electrode for a metal-air secondary battery and as an oxygen evolution electrode for an alkaline water electrolysis device.

### BRIEF DESCRIPTION OF THE DRAWINGS

FIG. 1 is a schematic view showing an embodiment of the air electrode of the present invention.
FIG. 2 is a schematic view of an H-shaped cell used for an electrode evaluation test in Examples.

### BEST MODE FOR CARRYING OUT THE INVENTION

The present invention is described in further detail below with reference to Examples.

### Example 1

Platinum black was used as an air electrode catalyst. The platinum black was mixed with a polytetrafluoroethylene dispersion liquid having a concentration of 60 wt% and ethanol such that the ratio (weight ratio) of platinum black:polytetrafluoroethylene dispersion liquid:ethanol = 5:1:1, thus obtaining a catalyst ink. The catalyst ink was applied onto a carbon cloth such that the amount of deposited platinum was 3 mg/cm², and then dried by heating, thus obtaining an air electrode catalyst layer.

As the anion exchange membrane, a 27 µm-thick hydrocarbon membrane having an ion exchange capacity of 1.4 mmol/g and containing a quaternary ammonium group as an ion exchange group was used. The above-described air electrode catalyst layer was hot-pressed onto one side of the membrane and integrated therewith.

Using the thus-obtained air electrode, an H-shaped cell, shown in a schematic view in FIG. 2, was prepared according to the following method, and an evaluation test on the air electrode was carried out.

First, the air electrode was mounted in the H-shaped cell and pushed onto gold mesh to maintain electrical contact for use as a working electrode. The air electrode catalyst layer side was open to the atmosphere. To a container on the opposite side thereof was added a 0.5 M aqueous solution of potassium hydroxide (60 mL) as an electrolyte solution, and dissolved oxygen was removed by argon gas. A platinum black electrode as a counter electrode and a reversible hydrogen electrode (RHE) as a reference electrode were placed in the electrolyte solution, and the air electrode performance at room temperature was evaluated by three-electrode measurements.

After measuring the initial value of the oxygen reduction potential in the air electrode, carbon dioxide was supplied to the air electrode catalyst layer side at a flow rate of 100 mL/min for one hour. Then, the air electrode catalyst layer side was again open to the atmosphere, and the oxygen reduction potential was measured.

Table 1 shows oxygen reduction potentials at a current density of 10 mA/cm² before and after the supply of carbon dioxide to the air electrode catalyst layer side.

### Comparative Example 1

An air electrode catalyst layer prepared by the same method as in Example 1 was inserted alone into an H-shaped cell, without using the anion exchange membrane, and the performance of the air electrode was evaluated by the same method as in Example 1. Table 1 shows the oxygen reduction potentials before and after the supply of carbon dioxide to the air electrode catalyst layer side.

**[Table 1]**

| | Oxygen Reduction Potential (10 mA·cm⁻²) | | Decrease Rate |
|---|---|---|---|
| | Before CO₂ Supply | After CO₂ Supply | |
| Example 1 | 0.58 V | 0.56 V | 3% |
| Comparative Example 1 | 0.60 V | 0.52 V | 13% |

As shown in Table 1, in the air electrode in Comparative Example 1, which is a conventional air electrode that does not use the anion exchange membrane, the oxygen reduction potential decreased by 13%, from 0.60 V to 0.52 V, due to the influence of carbon dioxide. Conversely, in the solid polymer-type air electrode in Example 1, the oxygen reduction potentials before and after the supply of carbon dioxide were 0.58 V and 0.56 V, respectively, and the decrease rate was only 3%. As described above, the air electrode of the present invention can clearly reduce the decrease in the air electrode performance due to the carbon dioxide in the atmosphere.

### Example 2

Platinum black that was treated with polytetrafluoroethylene to give water-repellency was used as an air electrode catalyst. This platinum black catalyst was mixed with a 5 wt% solution of anion exchange resin (hydrocarbon-based resin with an ion exchange capacity of 2 mmol/g, which contains a quaternary ammonium group as an ion exchange group) and ethanol such that the ratio (weight ratio) of platinum black:anion exchange resin solution: ethanol = 1:2.2:2, thus obtaining a catalyst ink. The catalyst ink was formed into a thin membrane to prepare an air electrode catalyst layer.

As the anion exchange membrane, a 27 µm-thick hydrocarbon membrane having an ion exchange capacity of 1.4 mmol/g and containing a quaternary ammonium group as an ion exchange group was used. The air electrode catalyst layer obtained according to the above method was hot-pressed onto one side of the membrane, and integrated therewith. The amount of platinum catalyst was 3 mg/cm², the anion exchange resin content in the electrode layer was 10 wt%, and the electrode layer thickness was about 1 µm.

This air electrode was inserted into an H-shaped cell shown in FIG. 2. The performance of the air electrode was evaluated by the same method as in Example 1, and the initial value of the oxygen reduction potential and a change in the oxygen reduction potential due to the influence of carbon dioxide were observed.

Table 2 shows oxygen reduction potentials at a current density of 10 mA/cm² before and after the supply of carbon dioxide.

### Comparative Example 2

An air electrode was prepared by the same method as in Example 2, except that a hydrophilically treated porous Teflon (trademark) membrane was used instead of the amnion exchange membrane, and the performance of the air electrode was evaluated. The change in the oxygen reduction potential before and after the supply of carbon dioxide to the air electrode catalyst layer side was examined by the same method as in Example 1. Table 2 shows the results.

**[Table 2]**

| | Oxygen Reduction Potential (10 mA·cm⁻²) | | Decrease Rate |
|---|---|---|---|
| | Before CO₂ Supply | After CO₂ Supply | |
| Example 2 | 0.68 V | 0.68 V | 0% |
| Comparative Example 2 | 0.64 V | 0.54 V | 16% |

As described above, in the air electrode in Example 2, the oxygen reduction potential remained the same at 0.68 V before and after the supply of carbon dioxide. The air electrode is clearly unsusceptible to the influence of carbon dioxide. Conversely, in the air electrode of Comparative Example 2, in which a porous Teflon (trademark) membrane was used instead of the anion exchange membrane, the oxygen reduction potential decreased by as much as 16%, from 0.64 V to 0.54 V, due to the influence of carbon dioxide. From the results, it is clear that the air electrode of the present invention is effective in achieving a longer lifetime of an air electrode.

### Example 3

An air electrode integrated with the anion exchange membrane was prepared by the same method as in Example 1. This air electrode was inserted into an H-shaped cell shown in FIG. 2, and the oxygen reduction property in the air electrode was evaluated by three-electrode measurements in the same manner as in Example 1.

After measuring the initial value of the oxygen reduction current in the air electrode, carbon dioxide was supplied to the air electrode catalyst layer side at a flow rate of 100 mL/min for one hour. Then, the air electrode catalyst layer side was again open to the atmosphere, and the oxygen reduction current was measured. This operation was repeated four times, and carbon dioxide was thereby supplied for a total of four hours. Then, the influence of carbon dioxide on the oxygen reduction property was observed.

Table 3 shows how the ratio (*iₜ*/*i₀*×100(%)) between the initial value (*i₀*) of the oxygen reduction current at a potential of 0.6V versus RHE and the value (*iₜ*) after the supply of carbon dioxide was changed with respect to the duration of the supply of carbon dioxide.

### Example 4

An air electrode was prepared by the same method as in Example 1, except that a 27 µm-thick hydrocarbon membrane having an ion exchange capacity of 1.7 mmol/g and containing a quaternary ammonium group as an ion exchange group was used as the anion exchange membrane. Changes in the oxygen reduction current according to the supply of carbon dioxide for a total of four hours was examined by the same method as in Example 3. Table 3 shows the results.

### Comparative Example 3

An air electrode catalyst layer prepared by the same method as in Example 1 was inserted alone into an H-shaped cell, without using the anion exchange membrane, and changes in the oxygen reduction current according to the supply of carbon dioxide for a total of four hours was examined by the same method as in Example 3. Table 3 shows the results.

**[Table 3]**

| | Oxygen Reduction Current Ratio *iₜ*/*i₀*×100 (0/6 V vs. RHE) | | | |
|---|---|---|---|---|
| Duration of CO₂ Supply | 1 hour | 2 hours | 3 hours | 4 hours |
| Example 3 | 93% | 92% | 91% | 91% |
| Example 4 | 94% | 91% | 87% | 83% |
| Comparative Example 3 | 92% | 84% | 78% | 71% |

As is clear from the above results, in the air electrode in Comparative Example 3, i.e., a conventional air electrode that does not use the anion exchange membrane, the oxygen reduction current value decreased along with the duration of the supply of carbon dioxide. The value was 71% relative to the initial value after the supply for a total of four hours, and corresponds to a decrease by as much as 29% from the initial value. Conversely, in the solid polymer air electrodes in Examples 3 and 4, the rate of decrease in the oxygen reduction current value was slow compared to Comparative Example 3. The oxygen reduction current ratios were maintained at 91% and 83% relative to initial values respectively in Examples 3 and 4, even after the supply of carbon dioxide for a total of four hours. As described above, the air electrode of the present invention can clearly reduce the decrease in the oxygen reduction performance due to the carbon dioxide.

### Example 5

An air electrode integrated with the anion exchange membrane was prepared by the same method as in Example 1. This air electrode was inserted into an H-shaped cell, and 4.0 M aqueous solution of potassium hydroxide (11 mL) was used as the electrolyte solution. The properties of the air electrode were evaluated by three-electrode measurements in the same manner as in Example 1. Regarding the properties of the air electrode, its performance with respect to the oxygen evolution reaction as well as the oxygen reduction reaction was evaluated.

After measuring the initial values of oxygen reduction current and oxygen evolution current in the air electrode, carbon dioxide was supplied to the air electrode catalyst layer side at a flow rate of 100 mL/min for two hours. Then, the air electrode catalyst layer side was again open to the atmosphere, and the oxygen reduction current and oxygen evolution current were measured.

As the oxygen reduction performance of the air electrode, Table 4 below shows the ratio (*iₜ*/*i₀*×100(%)) between the initial value (*i₀*) of the oxygen reduction current and the value (*iₜ*) after the supply of carbon dioxide at each potential of 0.6 V, 0.7 V, and 0.8 V versus RHE.

Further, as the oxygen evolution performance of the air electrode, Table 5 below shows the ratio (*iₜ*/*i₀*×100(%)) between the initial value (*i₀*) of the oxygen evolution current and the value (*iₜ*) after the supply of carbon dioxide at each potential of 1.6 V, 1.8 V, and 2.0 V versus RHE.

### Comparative Example 4

An air electrode catalyst layer prepared by the same method as in Example 1 was inserted alone into an H-shaped cell, without using the anion exchange membrane, and changes in the oxygen reduction current and the oxygen evolution current according to the supply of carbon dioxide was examined by the same method as in Example 5. Tables 4 and 5 show the results, respectively.

### Comparative Example 5

An air electrode was prepared by the same method as in Example 5, except that a hydrophilically treated porous Teflon (trademark) membrane was used instead of the anion exchange membrane. Then, changes in the oxygen reduction current and the oxygen evolution current according to the supply of carbon dioxide was examined by the same method as in Example 5. Tables 4 and 5 show the results, respectively.

**[Table 4]**

| Evaluation of Oxygen Reduction Performance | | | |
|---|---|---|---|
| | Oxygen Reduction Current Ratio *iₜ*/*i₀*×100 | | |
| Potential | 0.6 V vs. RHE | 0.7 V vs. RHE | 0.8 V vs. RHE |
| Example 5 | 83% | 85% | 81% |
| Comparative Example 4 | 49% | 48% | 46% |
| Comparative Example 5 | 66% | 63% | 61% |

As shown in Table 4 above, in the air electrode of Comparative Example 4, i.e., a conventional air electrode that does not use the anion exchange membrane, the oxygen reduction current value decreased to a range of 46% to 49% due to the influence of carbon dioxide. Conversely, in the air electrode of Example 5, the oxygen reduction current ratio was maintained at 80% or higher, even after the supply of carbon dioxide. It is clear that this air electrode is not susceptible to the influence of carbon dioxide. Further, in the air electrode in Comparative Example 5, in which a porous Teflon (trademark) membrane was used instead of the anion exchange membrane, the oxygen reduction current ratio was about 60%, which shows some degree of superiority to Comparative Example 4, in which the membrane was not used. However, compared with the air electrode in Example 5, the oxygen reduction current significantly decreased after the supply of carbon dioxide. From these results, a decrease in the oxygen reduction performance due to the influence of carbon dioxide is clearly reduced by the air electrode of the present invention.

**[Table 5]**

| Evaluation of Oxygen Evolution Performance | | | |
|---|---|---|---|
| | Oxygen Evolution Current Ratio *iₜ*/*i₀*×100 | | |
| Potential | 1.6 V vs. RHE | 1.8 V vs. RHE | 2.0 V vs. RHE |
| Example 5 | 100% | 100% | 87% |
| Comparative Example 4 | 57% | 57% | 59% |
| Comparative Example 5 | 47% | 54% | 60% |

As shown in Table 5 above, in the air electrode in Comparative Example 4, i. e. , a conventional air electrode that does not use the anion exchange membrane, the oxygen evolution current decreased to a range of 57% to 59% by the influence of carbon dioxide. Further, even in the air electrode of Comparative Example 5, in which a porous Teflon (trademark) membrane was used, the oxygen evolution current ratio was in the range of 47% to 60%, indicating a decrease of 40% or more. Conversely, in the air electrode of Example 5, the oxygen evolution current ratio was maintained at 87% or higher, even after the supply of carbon dioxide. It is clear that this air electrode is not susceptible to the influence of carbon dioxide. As described above, in the air electrode of the present invention, a decrease in the oxygen evolution performance due to the influence of carbon dioxide is clearly reduced.

## Claims

1. An air electrode, comprising a structure wherein an anion exchange membrane and an air electrode catalyst layer are laminated, and the anion exchange membrane is disposed in contact with an aqueous alkaline solution.

2. The air electrode as defined in Claim 1, wherein the anion exchange membrane is a polymer membrane having at least one anion exchange group selected from the group consisting of quaternary ammonium group, pyridinium group, imidazolium group, phosphonium group, and sulfonium group.

3. The air electrode as defined in Claim 1, wherein the electrode is a positive electrode for a metal-air primary battery or a metal-air secondary battery.

4. The air electrode as defined in Claim 1, wherein the electrode is a positive electrode for an alkaline fuel cell.

5. The air electrode as defined in Claim 1, wherein the electrode is an oxygen evolution electrode for an alkaline water electrolysis device.

6. A metal-air primary battery or metal-air secondary battery, comprising an electrolyte comprising an aqueous alkaline solution, and a positive electrode comprising the air electrode as defined in Claim 1.

7. An alkaline fuel cell, comprising an electrolyte comprising an aqueous alkaline solution, and a positive electrode comprising the air electrode as defined in Claim 1.

8. The alkaline fuel cell as defined in Claim 7, wherein the cell is used in applications as both a fuel cell and as a water electrolysis device.

9. An alkaline water electrolysis device, comprising an electrolysis cell containing an electrolyte comprising an aqueous alkaline solution, and an oxygen evolution electrode comprising the air electrode as defined in Claim 1.
